# EUROPÄISCHE PATENTSCHRIFT

(11) **EP 2 884 699 B1**
(45) Veröffentlichungstag und Bekanntmachung des Hinweises auf die Patenterteilung: **05.06.2019**
(21) Anmeldenummer: 14196034.4
(22) Anmeldetag: 03.12.2014
(51) Int. Cl.: H04L 12/28, H04L 29/06

(54) **Verfahren und System zur Kommunikation zwischen einem Kommunikations-Schnittstellenmodul einerseits und einem Telekommunikationsendgerät andererseits über ein Telekommunikationsnetz, wobei das Kommunikations-Schnittstellenmodul mit wenigstens einem elektrischen Gerät lokal in Verbindung steht, System umfassend ein Kommunikations-Schnittstellenmodul und ein Telekommunikationsendgerät, Kommunikations-Schnittstellenmodul, Computerprogramm und Computerprogrammprodukt**
Method and system for communication between a communication interface module on the one hand and a telecommunication terminal on the other hand over a telecommunication network, wherein the communication interface module is connected locally with at least one electrical apparatus, system comprising a communication interface module and a telecommunication terminal, communication interface module, computer program and computer program product
Procédé et système de communication entre un module d'interface de communication d'un côté et un terminal de télécommunication de l'autre à travers un réseau de télécommunication, dans lesquels le module d'interface de communication est connecté localement avec au moins un appareil électrique, système comprenant un module d'interface de communication et un terminal de télécommunication, module d'interface de communication, programme d'ordinateur et produit programme d'ordinateur

(30) Priorität: 10.12.2013 DE 102013225474
(43) Veröffentlichungstag der Anmeldung: 17.06.2015
(73) Patentinhaber: Deutsche Telekom AG, 53113 Bonn (DE)
(72) Erfinder: van den Berge, Fridtjof, 53227 Bonn (DE)
(74) Vertreter: Schwöbel, Thilo K.

(56) Entgegenhaltungen:
- WO-A2-02/01795
- US-A1- 2012 016 989
- US-A1- 2012 096 120

## Beschreibung

### Stand der Technik

Die Erfindung betrifft ein Verfahren zur Kommunikation zwischen einem Kommunikations-Schnittstellenmodul einerseits und einem Telekommunikationsendgerät andererseits über ein Telekommunikationsnetz, wobei das Kommunikations-Schnittstellenmodul mit wenigstens einem elektrischen Gerät lokal in Verbindung steht und wobei das Kommunikations-Schnittstellenmodul ein Identifikationsmodul aufweist, wobei das Telekommunikationsendgerät ein programmierbares Telekommunikationsendgerät mit einer Anwendung ist.

Die Erfindung betrifft ferner ein System zur Kommunikation zwischen einem Kommunikations-Schnittstellenmodul einerseits und einem Telekommunikationsendgerät andererseits über ein Telekommunikationsnetz, wobei das Kommunikations-Schnittstellenmodul mit wenigstens einem elektrischen Gerät lokal in Verbindung steht und wobei das Kommunikations-Schnittstellenmodul ein Identifikationsmodul aufweist, wobei das Telekommunikationsendgerät ein programmierbares Telekommunikationsendgerät mit einer Anwendung ist.

Ferner betrifft die Erfindung ein Kommunikations-Schnittstellenmodul zur Verwendung in einem erfindungsgemäßen Verfahren bzw. in einem erfindungsgemäßen System, wobei das Kommunikations-Schnittstellenmodul mit wenigstens einem elektrischen Gerät lokal in Verbindung steht und wobei das Kommunikations-Schnittstellenmodul ein Identifikationsmodul aufweist, wobei das Telekommunikationsendgerät ein programmierbares Telekommunikationsendgerät mit einer Anwendung ist.

Es sind sogenannte A2S-Kommunikationen (application to subscriber-Kommunikationen) bekannt, welche Produkte darstellen, welche für Anwendungen von privaten Kunden gedacht sind, wobei ein Gerät, welches zu dem Kunden gehört - insbesondere ein sogenanntes haushaltsmäßiges Gerät oder ein in den Haushalt des Kunden integriertes Gerät oder ein zusätzliche Funktionalitäten in einem Kraftfahrzeug des Kunden bereitstellendes Gerät -, Informationen übergeben kann und gegebenenfalls auch Änderungen bzw. Konfigurationen von einem eventuell mobilen Endgerätenutzer, d.h. der Kunde hat ein mobiles Endgerät, entgegen nehmen kann. Zu den entsprechenden Bezeichnungen bzw. bekannten Verfahren unter der Begrifflichkeit "A2P - application to person" sei lediglich beispielhaft auf die Begriffe "M2U - machine to user" bzw. "M2S - machine to subscriber" verwiesen bzw. auf die Produkte "Symsoft A2P messaging" der Firma symsoft (www.symsoft.com) bzw. das Produkt "a2p sms" der Firma tyntec (www.tyntec.com).

Aus der Druckschrift US 2012/096120 A1 ist ein Kommunikationsschnittstellenmodul zur Verwendung in einem Heimnetzwerk bekannt, mit einer Internet-Schnittstelle und einer Schnittstelle zu einem lokalen Netz zur Hausinternen Kommunikation mit einem oder mehreren Haushaltsgeräten. Über einen externen (Internet-)Server wird die Übermittlung von Daten in beiden Richtungen zwischen einem Haushaltsgerät und einem Telekommunikationsendgerät ermöglicht.

Weiterhin ist ein Verfahren zur Einbindung eines Smart Home-Geräts in ein Smart Home-System beispielsweise aus der Druckschrift DE 10 2011 118 565 A1 bekannt, wobei das Verfahren die Schritte des Bereitstellens eines Datenträgers, der dem Smart Home-Gerät zugeordnet ist, und auf dem Einrichtungsdaten zur Einbindung des Smart Home-Geräts in das Smart Home-System hinterlegt sind, des Auslesens der auf dem Datenträger hinterlegten Einrichtungsdaten durch die zentrale Steuereinheit des Smart Home-Systems und des Ausbildens eines Kommunikationskanals zwischen dem Smart Home-Gerät und der zentralen Steuereinheit auf der Grundlage der Einrichtungsdaten.

Bei solchen bekannten Verfahren ist es nachteilig, dass häufig über Kurznachrichten bzw. SMS-Nachrichten kommuniziert werden muss, was die Kommunikation unflexibel und häufig die Benutzung von Mobilfunkkommunikation erforderlich macht.

### Offenbarung der Erfindung

Der Erfindung liegt die Aufgabe zugrunde, ein Verfahren, ein System und ein Kommunikations-Schnittstellenmodul zur Kommunikation zwischen dem Kommunikations-Schnittstellenmodul einerseits und einem Telekommunikationsendgerät andererseits - eine sogenannte A2P-Kommunikation (application to person) - über ein Telekommunikationsnetz zu ermöglichen, wobei das Kommunikations-Schnittstellenmodul mit wenigstens einem elektrischen Gerät lokal in Verbindung steht, und wobei zum einen eine Vereinfachung und/oder eine Beschleunigung der Kommunikation bzw. zumindest von Teilaspekten der Kommunikation ermöglicht wird.

Diese Aufgabe wird erfindungsgemäß gelöst durch ein Verfahren gemäß Anspruch 1, zur Kommunikation zwischen einem Kommunikations-Schnittstellenmodul einerseits und einem Telekommunikationsendgerät andererseits über ein Telekommunikationsnetz, wobei das Kommunikations-Schnittstellenmodul mit wenigstens einem elektrischen Gerät lokal in Verbindung steht.

Es ist dadurch gemäß der vorliegenden Erfindung in vorteilhafter Weise möglich, dass über eine A2S-Kommunikation unterschiedliche Geräte über ein Medium mit dem hierfür zugewiesenen und im Funknetz eingebuchten Teilnehmer (Kunde) kommunizieren. Im Gegensatz zu A2P-Kommunikationen läuft eine solche Kommunikation gemäß der vorliegenden Erfindung nicht über SMS - d.h. nicht unter Benutzung von Kurznachrichten bzw. des Kurznachrichtendienstes SMS (short message system) -, sondern rein über eine Internet Protokoll-Kommunikation (IP-Kommunikation), beispielsweise über GRX bzw. GPRS (FPLMN bzw. HPLMN, 2,5G bzw. über mobiles Ethernet (G bzw. 4G). Auch über das Festnetz kann über IP gemäß der vorliegenden Erfindung über das Ethernet kommuniziert werden. Im Kontext der vorliegenden Erfindung bezeichnet hierbei der Begriff "2G" eine Mobilfunktechnologie der zweiten Generation, d.h. insbesondere GSM (Global System for Mobile Communikation bzw. Groupe Spéciale Mobile); der Begriff "2,5G" eine Mobilfunktechnologie der zweiten Generation mit Erweiterungen; der Begriff "3G" eine Mobilfunktechnologie der dritten Generation, d.h. insbesondere UMTS (Universal Mobile Telecommunication System); und der Begriff "4G" eine Mobilfunktechnologie der vierten Generation, d.h. insbesondere LTE (Long Term Evolution).

Das Kommunikations-Schnittstellenmodul stellt eine Einheit bzw. eine Komponente dar und wird im Rahmen der vorliegenden Erfindung auch als sogenannte "Fix-SIM-Comm Unit" bezeichnet.

Erfindungsgemäß ist es insbesondere von besonderem Vorteil, dass die A2S-Kommunikation (application to subscriber-Kommunikation) auch die S2A-Kommunikation (subscriber to application-Kommunikation) über IP zurück zur Applikation bzw. zurück zur Maschine - gegebenenfalls auch in oder an einem Fahrzeug - beinhaltet. Im erfindungsgemäßen Kommunikationskontext sind daher beidseitige bzw. bidirektionale Kommunikationen erfindungsgemäß vorgesehen, nämlich von einem Gerät (bzw. einer Applikation bzw. einer Anwendung) im Haus bzw. im Fahrzeug zum eingebuchten Teilnehmer bzw. dem Eigentümer bzw. dem Nutzer (oder Kunden) und von diesem wieder zurück.

Erfindungsgemäß ist es besonders vorteilhaft möglich, dass die erfindungsgemäße Kommunikationsverbindung rein im Datennetz durchgeführt wird und entsprechend das Signalisierungsnetz nicht gebraucht wird. Entsprechend ist es auch möglich, die Kommunikation aus Sicht der Anwendung bzw. der Applikation zu mobilen Endgeräten bzw. von mobilen Endgeräten in gleicher Weise führen zu lassen wie zu oder von Festanschlüssen.

Im Gegensatz zum M2M Produkt ("machine to machine communication", "machine to machine-Kommunikation" oder auch "MTC-Kommunikation" - machine type communication), welches für Großkunden definiert wurde, zielen die A2S-Kommunikation und/oder die S2A-Kommunikation gemäß der vorliegenden Erfindung direkt auf den privaten Verbraucher. A2S-Kommunikation und/oder S2A-Kommunikation haben als Ziel dem mobilen Kunden die Statusmeldungen (bzw. Stati) seiner Heimgeräte bzw. Anwendungen beispielsweise in einem Fahrzeug, Einstellungen solcher Heimgeräte bzw. Anwendungen, insbesondere in einem Fahrzeug, den Zugriff hierauf und gegebenenfalls Erinnerungen, Statusmeldungen (bzw. Stati) bzw. Übersichten nachzufragen bzw. zu schicken und somit zu geben. Erfindungsgemäß ist es von besonderem Vorteil, dass für die A2S-Kommunikation bzw. die S2A-Kommunikation zwischen Berechtigten bzw. zwischen Teilnehmern bzw. zwischen einem Kunden (bzw. dessen mobilem Endgerät) und einer Anwendung auf einem Gerät (etwa ein Smart Home-Gerät) über IP-Kommunikation und A2P-Kommunikation mit nur einer SIM-Karte (Subscriber Identity Module-Karte) unter Nutzung von Mobilfunkverbindungen oder aber unter Nutzung eines festen Internetanschlusses (Festnetzanschluss) die Verbindung aufgebaut werden kann.

Insbesondere ist vorgesehen, dass das Telekommunikationsendgerät ein programmierbares Telekommunikationsendgerät ist, insbesondere in Form eines sogenannten intelligenten Telefons (Smart Phone). Eine Alternative hierzu ist auch die Verwendung eine anderen Rechnersystems, etwas eines tragbaren Computers oder eines Tablet-Computers als Telekommunikationsendgerät. Erfindungsgemäß erfolgt die Kommunikation des Telekommunikationsendgeräts mit der Anwendung bzw. dem Gerät bzw. dem Fahrzeug oder dem in oder an einem Fahrzeug befindlichen Gerät gemäß dem Internet-Protokoll-Standard (TCP/IP).

Die Fix-SIM-Comm Unit bzw. das Kommunikations-Schnittstellenmodul ist erfindungsgemäß dafür vorgesehen, um mit nur einer SIM-Karte eine Anwendung oder mehrere Anwendungen mit einem Teilnehmer kommunizieren zu lassen, insbesondere über eine A2P-Kommunikation (application to person), unter Benutzung von Kurznachrichten oder auch unter Benutzung eines Sprachkanals und über eine A2S-Kommunikation (application to subscriber) bzw. über eine IP-Verbindung, und im Falle einer Kommunikation über IP auch zurück (S2A-Kommunikation subscriber to application). Entsprechend ist die Fix-SIM-Comm Unit die Schnittstelle zwischen einer Anwendung oder zwischen einer Mehrzahl von Anwendungen und dem Kunden bzw. den jeweiligen Kunden (d.h. einer Mehrzahl von Kunden). Erfindungsgemäß ist die Verwendung der Fix-SIM-Comm Unit insbesondere in einem Haus vorgesehen, wobei der Kontakt (bzw. die Kommunikation) zwischen dem Kunden bzw. dem Teilnehmer und den unterschiedlichen Geräten in diesem Haus bzw. Haushalt ermöglicht wird, insbesondere zur Ermöglichung von Statusmeldungen bzw. Statusabfragen (bzw. Stati-Abfragen), zur Ermöglichung von Übersichten oder Änderungen an den Geräten bzw. Konfigurationsänderungen.

Erfindungsgemäß ist es vorgesehen, dass das Kommunikations-Schnittstellenmodul eine Festnetzschnittstelle, insbesondere zum Anschluss eines Routers, und eine Mobilfunkschnittstelle, insbesondere zum Anschluss einer Antenne, aufweist, wobei für die Übertragung der ersten und/oder zweiten Nachricht zwischen dem Kommunikations-Schnittstellenmodul und dem Telekommunikationsnetz ein drahtgebundener Kommunikationskanal unter Nutzung der Festnetzschnittstelle oder ein wenigstens in Teilen drahtloser Kommunikationskanal unter Nutzung der Mobilfunkschnittstelle benutzt wird, wobei in Abhängigkeit der Verfügbarkeit des drahtgebundenen Kommunikationskanals und/oder des drahtlosen Kommunikationskanals und/oder in Abhängigkeit eines weiteren Parameters die Übertragung der ersten und/oder zweiten Nachricht
-- entweder unter Nutzung der Festnetzschnittstelle oder
-- unter Nutzung der Mobilfunkschnittstelle
erfolgt.

Das Kommunikations-Schnittstellenmodul bzw. die Fix-SIM-Comm Unit entspricht einer Aufnahme der SIM-Karte, die als Unit bzw. als Einheit Verbindungen über Funk- und/oder Festnetz aufbauen kann. Die Fix-SIM-Comm Unit bzw. das Kommunikations-Schnittstellenmodul ist erfindungsgemäß in der Lage, unterschiedliche Geräte über ein Medium mit dem hierfür zugewiesenen und im Funknetz eingebuchten Teilnehmer (Kunde) bzw. über den Festnetzanschluss mit diesem zu kommunizieren. Entsprechendes gilt auch für die Kommunikation über das mobile Internet und/oder über LAN (Local Area Network) bzw. Ethernet. Die Kommunikationsoptionen der Fix-SIM-Comm Unit sind zum einen die Benutzung des Festnetzanschlusses als auch die Benutzung der SIM-Karte (d.h. der Mobilfunkschnittstelle) und damit die Kommunikation über die Festnetze bzw. Funknetze. Hierzu prüft die Fix-SIM-Comm Unit immer den optimalen Übertragungsweg und wählt diesen aus.

Es ist erfindungsgemäß besonders vorteilhaft möglich, diese Auswahl zwischen der Benutzung der Festnetzschnittstelle des Kommunikations-Schnittstellenmoduls (bzw. der Fix-SIM-Comm Unit) und der Benutzung der Mobilfunkschnittstelle des Kommunikations-Schnittstellenmoduls (bzw. der Fix-SIM-Comm Unit) zu ermöglichen, insbesondere um die Kommunikation sicherer und flexibler durchführen zu können.

Erfindungsgemäß ist es ferner bevorzugt vorgesehen, dass das Identifikationsmodul eine SIM-Karte (Subscriber Identity Module) oder eine USIM-Karte (Universal Subscriber Identity Module) ist.

Ferner ist es erfindungsgemäß bevorzugt, dass das Kommunikations-Schnittstellenmodul mit einer Mehrzahl von elektrischen Geräten lokal in Verbindung steht, wobei das Identifikationsmodul ein identisches Identifikationsmodul für die Mehrzahl von elektrischen Geräten ist oder wobei das Identifikationsmodul ein multivalentes, mehrere verschiedene Identitäten bereitstellendes Identifikationsmodul - insbesondere in Form einer Multi-SIM-Karte - für die Mehrzahl von elektrischen Geräten derart ist, dass jedem elektrischen Gerät der Mehrzahl von elektrischen Geräten ein Identität des Identifikationsmoduls zuordenbar ist.

Erfindungsgemäß ist es von besonderem Vorteil, dass durch die Verwendung von nur einer SIM-Karte in der Fix-SIM-Comm Unit bei einer Verwendung einer Vielzahl von elektrischen Geräten bzw. allgemein Geräten sowohl Kosten eingespart werden können wie auch die Möglichkeit geschaffen werden kann, um gegebenenfalls Geräte anzuschließen, die hierzu primär nicht angedacht gewesen wären.

Die Fix-SIM-Comm Unit entspricht einer Einheit, die Netzverbindungen über Funk und/oder über Festnetz aufzubauen in der Lage ist, nämlich über eine Luftschnittstelle mittels der SIM-Karte und eine Antenne (wobei die Fix-SIM-Comm Unit über eine Aufnahme der SIM-Karte verfügt) sowie über einen Festnetzanschluss bzw. eine Mehrzahl von Festnetzanschlüssen über beispielsweise jeweils mindestens einen RJ45-Anschluss und/oder mittels einer USB-Verbindung (USB: universal serial bus) zu einem Router oder einem Modem. Die Fix-SIM-Comm Unit wird selbständig die Verbindung über die Schnittstelle und über Protokolle wählen, die die beste Übertragung darstellen, wenn beide zur Auswahl stehen. Hierzu werden über das Einschalten bzw. danach über ein vorgegebenes Intervall die Verbindungsmöglichkeiten der Fix-SIM-Comm Unit überprüft.

Die Anzahl der Anschlüsse auf der Seite der Fix-SIM-Comm Unit kann bzw. können gegebenenfalls über Switch-Hubs entsprechend erweitert werde. Hierzu sollen vor allem auch PoE (Power over Ethernet) oder die Stromversorgung über USB berücksichtigt werden. Mittels des Verfahrens "Power over Ethernet" ist es möglich, wenigstens bis zu einer Spannung von 48 Volt und einer Stromstärke von 350 Milliampere Geräte mit Strom zu versorgen. Mittels der Stromversorgung über USB ist es möglich, wenigstens bis zu einer Spannung von 5 Volt und einer Stromstärke von 100 Milliampere bzw. 500 Milliampere Geräte mit Strom zu versorgen. Hierdurch ist es erfindungsgemäß vorteilhaft möglich, Gerätezustände bzw. Stati bei solchen Geräten abzufragen, die entweder vom Stromnetz abgeschaltet sind - d.h. der Stromschalter steht auf "aus" - oder einen sehr geringen Strombedarf haben. Für Europa ist eine LAN-Verkabelung gemäß TIA-568A und für die USA eher eine LAN-Verkabelung gemäß TIA-568B an den Anschlüssen zu berücksichtigen. Erfindungsgemäß weisen die Anschlüsse der Fix-SIM-Comm Unit entsprechende RJ45-Modularsteckerverbindungen oder USB-Anschlüsse auf.

Bei Geräten (d.h. an die Fix-SIM-Comm Unit angeschlossenen elektrischen Geräten), die zum Beispiel mobil zu überprüfen sind, die ohne die vorgegebenen Anschlüsse ausgeführt sind und nur Stromanschlüsse aufweisen, können durch die Fix-SIM-Comm Unit kontrolliert werden, auch ohne Verwendung einer sogenannten Home-Automation. Erfindungsgemäß ist dies derart vorgesehen, dass beispielsweise ein Unterbrecher oder eine Mehrzahl von Unterbrechern bzw. ein Relais oder eine Mehrzahl von Relais in einem Schaltschrank angeordnet ist/sind, worüber ein Stromfluss aufzubauen oder gegebenenfalls ein existierender Stromfluss zu unterbrechen ist, wobei der Unterbrecher oder die Mehrzahl von Unterbrechern bzw. das Relais oder die Mehrzahl von Relais über einen Switch-Hub mit der Fix-SIM-Comm Unit verbunden sind.

Die Fix-SIM-Comm Unit bildet die Verbindung zwischen einer Anwendung bzw. unterschiedlichen Anwendungen und einem hierfür freigegebenen Teilnehmer oder mehreren hierfür freigegebenen Teilnehmern (im Fest- oder Mobilfunknetz). Für die vorgenannten Anwendungen sind kurzreichweitige Verbindungen, etwa sogenannte NFC (near field communications), d.h. Nahfeldkommunikationen, oder auch andere Übertragungsstandards wie zum Beispiel Bluetooth, LAN (evtl. über das Stromnetz per Adapter-Set), WLAN (Wireless Local Area Network) und/oder ZigBee bzw. SRWN als Kommunikationswege zu der Fix-SIM-Comm Unit angedacht, die aufgebaut werden können, falls dies erwünscht oder erforderlich ist.

Erfindungsgemäß ist es vorgesehen, dass der weitere Parameter, in Abhängigkeit dessen die Übertragung der ersten und/oder zweiten Nachricht entweder unter Nutzung der Festnetzschnittstelle oder unter Nutzung der Mobilfunkschnittstelle erfolgt, ein Parameter oder mehrere Parameter aus der nachfolgenden Liste von Parametern ist:
-- das Datum der Übertragung der ersten und/oder zweiten Nachricht,
-- die Uhrzeit der Übertragung der ersten und/oder zweiten Nachricht,
-- der Zustand des Kommunikations-Schnittstellenmoduls,
-- der Zustand eines elektrischen Geräts, mit welchem das Kommunikations-Schnittstellenmodul lokal in Verbindung steht.

Hierdurch ist es erfindungsgemäß in vorteilhafter Weise möglich, besonders flexibel die Kommunikation zwischen dem Kommunikations-Schnittstellenmodul und dem Telekommunikationsendgerät zu steuern.

Erfindungsgemäß ist es bevorzugt vorgesehen, dass die Verfügbarkeit des drahtgebundenen Kommunikationskanals und/oder des drahtlosen Kommunikationskanals für die Übertragung der ersten und/oder zweiten Nachricht zwischen dem Kommunikations-Schnittstellenmodul und dem Telekommunikationsnetz wenigstens einmal innerhalb eines vorgegebenen Zeitintervalls - etwa einmal alle 60 Minuten oder einmal alle 24 Stunden oder einmal alle 7 Tage - geprüft wird.

Dies hat in vorteilhafter Weise zur Folge, dass frühzeitig ein Ausfall des drahtgebundenen Kommunikationskanals feststellbar ist.

Erfindungsgemäß ist es ferner besonders bevorzugt vorgesehen, dass zur Validierung des Telekommunikationsendgeräts oder von dessen Benutzenden gegenüber dem Kommunikations-Schnittstellenmodul die erste Nachricht eine am Telekommunikationsendgerät durch einen Benutzer einzugebende personalisierte Kennungsinformation aufweist oder eine von einer solchen personalisierten Kennungsinformation abgeleitete Information aufweist oder eine Information aufweist, von der die personalisierte Kennungsinformation durch das Kommunikations-Schnittstellenmodul ableitbar ist.

Erfindungsgemäß ist es ferner in besonderer Weise bevorzugt, dass die bestimmungsgemäße Verarbeitung der zweiten Nachricht durch das Telekommunikationsendgerät, insbesondere die Anzeige des Nachrichteninhalts durch das Telekommunikationsendgerät, eine durch einen Benutzer am Telekommunikationsendgerät einzugebende personalisierte Kennungsinformation erfordert, wobei insbesondere die zweite Nachricht die einzugebende personalisierte Kennungsinformation aufweist oder eine von einer solchen personalisierten Kennungsinformation abgeleitete Information aufweist oder eine Information aufweist, von der die personalisierte Kennungsinformation durch das Telekommunikationsendgerät ableitbar ist.

Erfindungsgemäß ist es ferner bevorzugt vorgesehen, dass das Kommunikations-Schnittstellenmodul eine benutzerkonfigurierbare Geräteinformation umfasst, wobei die Geräteinformation auf für den Versand von validen ersten Nachrichten berechtigten Geräten bezogen ist, wobei die erste Nachricht eine am Telekommunikationsendgerät durch einen Benutzer einzugebende personalisierte Kennungsinformation aufweist.

Durch die Eingabe bzw. Übertragung von Kennungsinformationen, insbesondere personalisierten Kennungsinformationen, ist es erfindungsgemäß vorteilhaft möglich, dass die Kommunikation zwischen dem Telekommunikationsendgerät einerseits und dem Kommunikations-Schnittstellenmodul andererseits abgesichert wird bzw. gegenüber Angriffen bzw. Betrugsversuchen sicherer gemacht wird. Über beispielsweise eine geforderte Eingabe einer personalisierten Kennung (beispielsweise eine PIN-Nummer (personal identification number) kann eine zusätzliche Sicherheit mitgegeben werden, unter anderem falls das bis dahin genutzte Endgerät bzw. Telekommunikationsendgerät abhanden gekommen oder kaputt ist und beispielsweise von einem Rechner über den Festnetzanschluss die Funktionalitäten genutzt werden sollen. Dazu soll in der Fix-SIM-Comm Unit optional zur Sicherheit eine sogenannte Kommunikationsliste hinterlegt werden, die wie eine Zugangskontrollliste bzw. ACL (access control list) in der Fix-SIM-Comm Unit konfiguriert ist.

Abgesehen von dem Datenversand zu dem Empfänger bzw. zu den Empfängern, welcher für die A2S-Konnektivität und die S2A-Konnektivität direkt über IP via Mobilfunk und/oder über Festnetz stattfindet, sind bereits Netzsicherheiten vorgegeben, abhängig von den vorgenommenen Einstellungen und der Verfügbarkeit. Jeder Nutzer der Fix-SIM-Comm Unit ist für die erweiterten Sicherheitseinstellungen und die Zugriffsrechte selbst verantwortlich und kann diese frei konfigurieren. Sowohl beim Kauf der Fix-SIM-Comm Unit als auch daheim können sämtliche Parameter, wie zum Beispiel eine zusätzliche Rufnummer, in einer Art Kommunikationsliste, d.h. also eine Art ACL (Access Control List), oder auch in einer Filtermatrix, insbesondere über eine Benutzeroberfläche (GUI graphical user interface) der Fix-SIM-Comm Unit, in der Unit konfiguriert werden. Als Medium zum Austausch der Daten wird erfindungsgemäß insbesondere das Internet (IP) bzw. ein GRX-GPRS-Netz verwendet. Der Transport erfolgt beispielsweise über die Transportprotokolle Apple Talk (ATP bis zum Betriebssystem OS X 10.6 Snow Leopard), GTP (GPRS Tunneling Protocol), IPX/SPX (Internetwork Packet eXchange/Sequenced Packet Exchange), TCP/IP (Transmission Control Protocol/Internet Protokol) oder über SCTP (Stream Control Transmission Protocol) (überwiegend in der Schicht 4 des OSI-Modells). Bevorzugte Übertragungsprotokoll-Formate (Anwenderschicht 7 des OSI-Modells bzw. EtherTalk) für die Datenübertragung sind HTTPS (HyperText Transfer Protocol Secure), SCP (Secure Copy Protocol), SFTP (Simple File Transfer Protocol), SSH (Secure Shell) und SMTP (Simple Mail Transfer Protocol) wegen der Einhaltung einer erhöhten Sicherheitsstufe. Da die Kommunikation nicht nur über hierfür freigeschaltete Mobilfunkgeräte stattfinden muss, kann beispielsweise die geforderte Eingabe einer personalisierten Kennung (beispielsweise eine PIN (personal identification number) eine zusätzliche Sicherheit ermöglichen, etwa für den Fall dass das bis dahin genutzte Telekommunikationsendgerät abhanden gekommen ist oder kaputt ist und die Kommunikation mit der Fix-SIM-Comm Unit und die Funktionalitäten von einem anderen Endgerät oder Rechner aus genutzt werden sollen.

Weiterhin ist es erfindungsgemäß bevorzugt vorgesehen, dass das Kommunikations-Schnittstellenmodul eine Speichereinrichtung aufweist, wobei in der Speichereinrichtung Informationen bezüglich der ersten, vom Telekommunikationsendgerät empfangenen Nachricht und/oder bezüglich der zweiten, an das Telekommunikationsendgerät gesendeten Nachricht gespeichert werden, wobei die in der Speichereinrichtung gespeicherten Informationen wenigstens das Datum und die Zeit der ersten und/oder zweiten Nachricht umfassen, wobei insbesondere die in der Speichereinrichtung gespeicherten Informationen darüber hinaus wenigstens einen Teil des Nachrichteninhalts, insbesondere den gesamten Nachrichteninhalt, der ersten Nachricht und/oder der zweiten Nachricht umfassen.

Hierdurch ist es in vorteilhafter Weise möglich, dass in der Fix-SIM-Comm Unit bzw. in dem Kommunikations-Schnittstellenmodul eine Logbuch-Funktionalität realisiert werden kann. Die Fix-SIM-Comm Unit verfügt damit über ein Logbuch für die Quittierung der versendeten Daten bzw. bei Erhalt zur Protokollierung der empfangenen Daten. Das Logbuch kann über einen Rechner - beispielsweise einen Personal Computer - abgefragt werden und im Bildschirm des Rechners durchgelesen werden. Das Logbuch braucht nur eine vergleichsweise geringe Kapazität, da - wenn erforderlich - Daten des Öfteren in einem kürzeren Zeitraum ausgelesen werden können, beispielsweise an den Rechner. Entsprechend werden ältere Daten innerhalb des Logbuchs der Fix-SIM-Comm Unit überschrieben. Die Fix-SIM-Comm Unit besitzt bevorzugt Einstellmöglichkeiten zum Datenversand wie etwa die Häufigkeit, die Kommunikations- und Nutzungsberechtigungen, den Zeitpunkt (d.h. insbesondere den Tag und die Uhrzeit), eine Flag-Erkennung, Art der Daten bezogen auf die Quelle und eventuell die Versandweise der Daten. Der Datenaustausch zwischen Sender und Empfänger geschieht in üblichen, jedoch gegebenenfalls auch unterschiedlichen Formaten. Der hierzu berechtigte Empfänger bzw. Sender kann über Konfigurationseinstellungen gewisse Parameter mit der Fix-SIM-Comm Unit austauschen. Hierbei ist es insbesondere erfindungsgemäß vorgesehen, dass Daten auch als E-Mail-Nachricht verschickt werden.

Ein weiterer Gegenstand der vorliegenden Erfindung ist ein System nach Anspruch 9 umfassend ein Kommunikations-Schnittstellenmodul und ein Telekommunikationsendgerät, wobei das Kommunikations-Schnittstellenmodul zur Kommunikation mit dem Telekommunikationsendgerät über ein Telekommunikationsnetz konfiguriert ist, wobei das Kommunikations-Schnittstellenmodul mit wenigstens einem elektrischen Gerät lokal in Verbindung steht.

Weiterhin bezieht sich die vorliegende Erfindung auch auf ein Kommunikations-Schnittstellenmodul nach Anspruch 10 zur Verwendung in einem erfindungsgemäßen System.

Ferner bezieht sich die vorliegende Erfindung auch auf ein Computerprogramm mit Programmcodemitteln nach Anspruch 11, mit deren Hilfe alle Schritte des erfindungsgemäßen Verfahrens durchführbar sind, wenn das Computerprogramm auf einer programmierbaren Einrichtung und/oder auf einem programmierbaren Telekommunikationsendgerät und/oder auf einem Kommunikations-Schnittstellenmodul, insbesondere in Teilen auf einem programmierbaren Telekommunikationsendgerät und in Teilen auf einem Kommunikations-Schnittstellenmodul, ausgeführt wird.

Weiterhin ist Gegenstand der vorliegenden Erfindung ein Computerprogrammprodukt gemäß Anspruch 12 mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder auf einem programmierbaren Telekommunikationsendgerät und/oder einem Kommunikations-Schnittstellenmodul, insbesondere in Teilen auf einem programmierbaren Telekommunikationsendgerät und in Teilen auf einem Kommunikations-Schnittstellenmodul, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines erfindungsgemäßen Systems umfassend ein Telekommunikationsendgerät sowie ein Kommunikations-Schnittstellenmodul mit einer Mehrzahl von elektrischen Geräten.
- **Figur 2**: zeigt eine schematische Darstellung eines Kommunikations-Schnittstellenmoduls mit einer Mehrzahl von Schnittstellen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

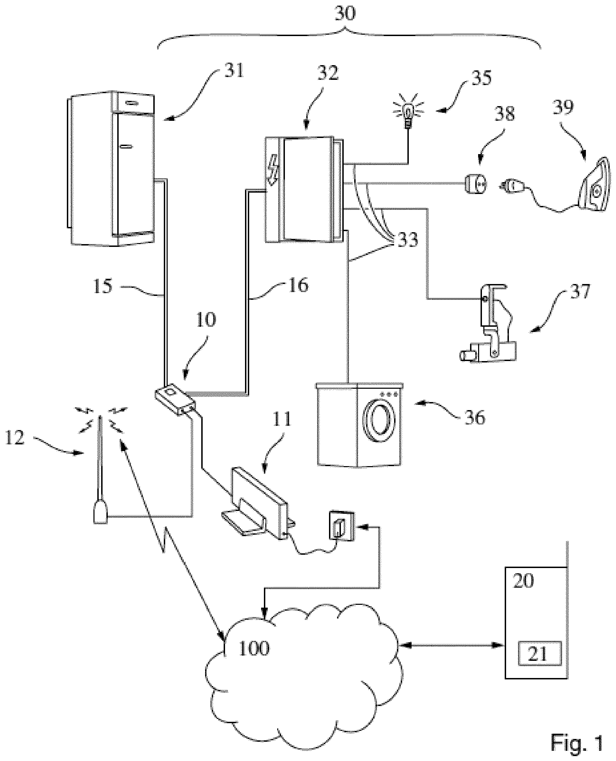

In Figur 1 ist schematisch eine Ansicht eines erfindungsgemäßen Systems umfassend ein Telekommunikationsendgerät 20 sowie ein Kommunikations-Schnittstellenmodul 10 mit einer Mehrzahl von elektrischen Geräten dargestellt. Das Kommunikations-Schnittstellenmodul 10 ist über ein Telekommunikationsnetz 100 mit dem Telekommunikationsendgerät 20 verbunden bzw. verbindbar.

An das Kommunikations-Schnittstellenmodul 10 ist ein elektrisches Gerät 30 oder aber eine Mehrzahl von elektrischen Geräten 30 angeschlossen. Hierbei weist das Kommunikations-Schnittstellenmodul 10 mehrere Schnittstellen zum Anschluss dieses elektrischen Gerätes 30 bzw. zum Anschluss dieser Mehrzahl von elektrischen Geräten 30 auf. Die Gesamtheit der an das Kommunikations-Schnittstellenmodul 10 lokal anschließbaren bzw. angeschlossenen elektrischen Geräte werden nachfolgend mit dem Bezugszeichen 30 bezeichnet.

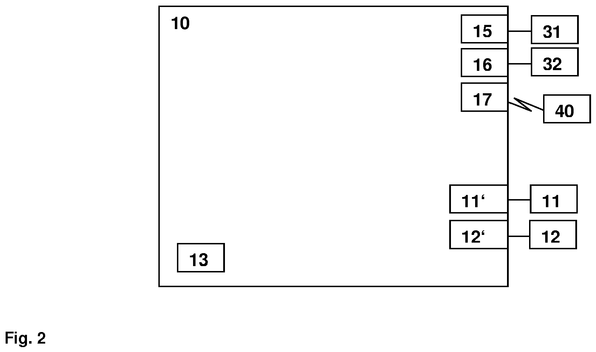

In Figur 2 ist eine schematische Darstellung des Kommunikations-Schnittstellenmoduls 10 dargestellt. Aus der Figur 2 wird auch deutlich, dass das Kommunikations-Schnittstellenmodul 10 ein Identifikationsmodul 13 aufweist. Das Identifikationsmodul 13 ist insbesondere in Form einer SIM-Karte oder in Form einer USIM-Karte vorgesehen. Insbesondere ist das Identifikationsmodul 13 die einzige SIM-Karte für die Mehrzahl von elektrischen Geräten 30, die an das Kommunikations-Schnittstellenmodul 10 angeschlossen sind, d.h. durch das Kommunikations-Schnittstellenmodul 10 ist es erfindungsgemäß vorteilhaft möglich, dass die Mehrzahl der elektrischen Geräte 30 jeweils mit dem Telekommunikationsendgerät 20 bzw. dem Telekommunikationsnetz 100 Nachrichten austauschen, ohne dass es erforderlich wäre, jedes elektrische Gerät 30 mit einem Identifikationsmodul 13 auszurüsten.

Die Verbindung zwischen dem Kommunikations-Schnittstellenmodul 10 und dem Telekommunikationsnetz 100 ist erfindungsgemäß (vgl. insbesondere Figur 2) als drahtgebundene Verbindung über eine Festnetzschnittstelle 11' (insbesondere über einen Festnetzanschluss - etwa eine Breitbandinternetverbindung, beispielsweise in Form eines DSL-Anschlusses (digital subscriber line) - unter Verwendung beispielsweise eines Routers 11 bzw. eines Modems) oder aber unter Nutzung einer Mobilfunkverbindung über eine Mobilfunkschnittstelle 12' vorgesehen. Beispielsweise weist das Kommunikations-Schnittstellenmodul 10 eine Antenneneinrichtung auf (nicht dargestellt) oder dem Kommunikations-Schnittstellenmodul 10 ist-wie in Figur 1 dargestellt - eine Antenne 12 oder eine Antenneneinrichtung 12 zugeordnet, welche die Luftschnittstelle der Mobilfunkverbindung und damit der Mobilfunkschnittstelle 12' zum Telekommunikationsnetz 100 zur Verfügung stellt.

Aus der Figur 1 wird deutlich, dass das Telekommunikationsendgerät 20 Insbesondere mit einer Anwendung 21 ausgestattet ist, mittels welcher die Kommunikation mit dem Kommunikations-Schnittstellenmodul 10 möglich ist. Das Telekommunikationsendgerät 20 ist insbesondere als ein programmierbares Telekommunikationsendgerät vorgesehen, insbesondere in Form eines sogenannten intelligenten Telefons (Smart Phone). Eine Alternative hierzu ist auch die Verwendung eine anderen Rechnersystems, etwas eines tragbaren Computers oder eines Tablet-Computers als Telekommunikationsendgerät 20. Erfindungsgemäß erfolgt die Kommunikation des Telekommunikationsendgeräts 20 mit dem Kommunikations-Schnittstellenmodul 10 und über das Kommunikations-Schnittstellenmodul 10 mit dem Gerät bzw. dem Fahrzeug oder dem in oder an dem Fahrzeug befindlichen Gerät gemäß dem Internet-Protokoll-Standard (TCP/IP).

Ebenfalls aus der Figur 2 (bzw. teilweise auch aus Figur 1) geht hervor, dass das Kommunikations-Schnittstellenmodul 10 als lokale Schnittstellen zum Anschluss von elektrischen Geräten 30
-- eine lokale Schnittstelle erster Art 15 und/oder,
-- eine lokale Schnittstelle zweiter Art 16 und/oder
-- eine lokale Funkschnittstelle 17
aufweist.

Über die lokale Schnittstelle erster Art 15 ist ein drahtgebundener Anschluss eines ersten elektrischen Geräts 31 (aus der Mehrzahl an elektrischen Geräten 30) an das Kommunikations-Schnittstellenmodul 10 erfindungsgemäß möglich. Die lokale Schnittstelle erster Art 15 entspricht insbesondere einer Schnittstelle, über die elektrische Geräte 30, die ihrerseits eine Kommunikationsschnittstelle aufweisen, angeschlossen werden, beispielsweise ein intelligenter Kühlschrank oder dergleichen.

Über die lokale Schnittstelle zweiter Art 16 ist ein drahtgebundener Anschluss eines zweiten elektrischen Geräts 32 (aus der Mehrzahl an elektrischen Geräten 30) an das Kommunikations-Schnittstellenmodul 10 erfindungsgemäß möglich. Die lokale Schnittstelle zweiter Art 16 entspricht insbesondere einer Schnittstelle, über die ein spezielles elektrisches Gerät, etwa einen eine Kommunikationsschnittstelle aufweisenden Schaltschrank, für eine Wohnung oder ein Haus anschließbar ist.

Das zweite elektrische Gerät 32 (insbesondere ein eine Kommunikationsschnittstelle aufweisender Schaltschrank) weist erfindungssgemäß eine lokale Schnittstelle dritter Art 33 auf, worüber ein drahtgebundener Anschluss des Kommunikations-Schnittstellenmoduls 10 mit wenigstens einem dritten elektrischen Gerät 36 und/oder mit wenigstens einem vierten elektrischen Gerät 37 und/oder mit wenigstens einem fünften elektrischen Gerät 38 vorgesehen ist. Bei dem dritten elektrischen Gerät 36 handelt es sich beispielsweise um eine Waschmaschine. Bei dem vierten elektrischen Gerät 37 handelt es sich beispielsweise um eine Überwachungskamera. Bei dem fünften elektrischen Gerät 38 handelt es sich beispielsweise um eine Steckdose, über welche ein beliebiger Stromverbraucher, etwa ein Bügeleisen, anschließbar ist. Ferner ist es auch möglich, über eine lokale Schnittstelle dritter Art 33 das zweite elektrische Gerät 32 mit einem weiteren elektrischen Gerät 35 - etwa eine Beleuchtungseinrichtung wie eine Glühbirne oder dergleichen zu verbinden.

Aus der Figur 2 ist ersichtlich, dass mittels einer lokalen Funkschnittstelle 17 der drahtlose Anschluss eines sechsten elektrischen Geräts 40 möglich ist, wobei die lokale Schnittstelle dritter Art 17 insbesondere eine Bluetooth-Schnittstelle und/oder eine WLAN-Schnittstelle (Wireless Local Area Network Schnittstelle) und/oder eine ZigBee-Schnittstelle und/oder eine SRWN-Schnittstelle (Short Range Wireless Network Schnittstelle) und/oder eine NFC-Schnittstelle (Near Field Communication Schnittstelle) ist.

## Patentansprüche

1. Verfahren zur Kommunikation zwischen einem Kommunikations-Schnittstellenmodul (10) einerseits und einem Telekommunikationsendgerät (20) andererseits über ein Telekommunikationsnetz (100), wobei das Kommunikations-Schnittstellenmodul (10) mit wenigstens einem elektrischen Gerät (31, 32, 36, 37, 38) lokal in Verbindung steht, wobei das Kommunikations-Schnittstellenmodul (10) ein Identifikationsmodul (13) aufweist, wobei das Telekommunikationsendgerät (20) ein programmierbares Telekommunikationsendgerät (20) mit einer Anwendung (21) ist, wobei wenigstens eine erste Nachricht durch die Anwendung (21) des Telekommunikationsendgeräts (20) zum Kommunikations-Schnittstellenmodul (10) übertragen wird, wobei wenigstens eine zweite Nachricht durch das Kommunikations-Schnittstellenmodul (10) zum Telekommunikationsendgerät (20) übertragen wird, wobei die erste Nachricht und die zweite Nachricht
-- unter Benutzung einer Internet-Protokoll-Verbindung
zwischen einerseits dem Kommunikations-Schnittstellenmodul (10) und dem Telekommunikationsnetz (100) und andererseits dem Telekommunikationsendgerät (20) und dem Telekommunikationsnetz (100) übertragen wird, wobei eine Identifizierung des Kommunikations-Schnittstellenmoduls (10) mittels des Identifikationsmoduls (13) erfolgt,
wobei das Kommunikations-Schnittstellenmodul (10) eine Festnetzschnittstelle (11') und eine Mobilfunkschnittstelle (12') aufweist, wobei für die Übertragung der ersten und/oder zweiten Nachricht zwischen dem Kommunikations-Schnittstellenmodul (10) und dem Telekommunikationsnetz (100) ein drahtgebundener Kommunikationskanal unter Nutzung der Festnetzschnittstelle (11') oder ein wenigstens in Teilen drahtloser Kommunikationskanal unter Nutzung der Mobilfunkschnittstelle (12') benutzt wird, wobei in Abhängigkeit der Verfügbarkeit des drahtgebundenen Kommunikationskanals und/oder des drahtlosen Kommunikationskanals und in Abhängigkeit eines weiteren Parameters die Übertragung der ersten und/oder zweiten Nachricht
-- entweder unter Nutzung der Festnetzschnittstelle (11') oder
-- unter Nutzung der Mobilfunkschnittstelle (12')
erfolgt, **dadurch gekennzeichnet, dass** der weitere Parameter, in Abhängigkeit dessen die Übertragung der ersten und/oder zweiten Nachricht entweder unter Nutzung der Festnetzschnittstelle (11') oder unter Nutzung der Mobilfunkschnittstelle (12') erfolgt, ein Parameter oder mehrere Parameter aus der nachfolgenden Liste von Parametern ist:
-- das Datum der Übertragung der ersten und/oder zweiten Nachricht,
-- die Uhrzeit der Übertragung der ersten und/oder zweiten Nachricht,
-- der Zustand des Kommunikations-Schnittstellenmoduls (10),
-- der Zustand eines elektrischen Geräts (31, 32, 36, 37, 38), mit welchem das Kommunikations-Schnittstellenmodul (10) lokal in Verbindung steht, wobei das Kommunikations-Schnittstellenmodul (10) selbständig diejenige Verbindung über zur Verfügung stehende Schnittstellen und Protokolle wählt, die die Übertragung der ersten und/oder zweiten Nachricht am besten ermöglicht.

2. Verfahren nach Anspruch 1, **dadurch gekennzeichnet, dass** die Verfügbarkeit des drahtgebundenen Kommunikationskanals und/oder des drahtlosen Kommunikationskanals für die Übertragung der ersten und/oder zweiten Nachricht zwischen dem Kommunikations-Schnittstellenmodul (10) und dem Telekommunikationsnetz (100) wenigstens einmal innerhalb eines vorgegebenen Zeitintervalls geprüft wird.

3. Verfahren nach einem der vorhergehenden Ansprüche, **dadurch gekennzeichnet, dass** zur Validierung des Telekommunikationsendgeräts (20) oder von dessen Benutzenden gegenüber dem Kommunikations-Schnittstellenmodul (10) die erste Nachricht eine am Telekommunikationsendgerät (20) durch einen Benutzer einzugebende personalisierte Kennungsinformation aufweist oder eine von einer solchen personalisierten Kennungsinformation abgeleitete Information aufweist oder eine Information aufweist, von der die personalisierte Kennungsinformation durch das Kommunikations-Schnittstellenmodul (10) ableitbar ist.

4. Verfahren nach einem der vorhergehenden Ansprüche, **dadurch gekennzeichnet, dass** die bestimmungsgemäße Verarbeitung der zweiten Nachricht durch das Telekommunikationsendgerät (20), insbesondere die Anzeige des Nachrichteninhalts durch das Telekommunikationsendgerät (20), eine durch einen Benutzer am Telekommunikationsendgerät (20) einzugebende personalisierte Kennungsinformation erfordert, wobei insbesondere die zweite Nachricht die einzugebende personalisierte Kennungsinformation aufweist oder eine von einer solchen personalisierten Kennungsinformation abgeleitete Information aufweist oder eine Information aufweist, von der die personalisierte Kennungsinformation durch das Telekommunikationsendgerät (20) ableitbar ist.

5. Verfahren nach einem der vorhergehenden Ansprüche, **dadurch gekennzeichnet, dass** das Kommunikations-Schnittstellenmodul (10) eine benutzerkonfigurierbare Geräteinformation umfasst, wobei die Geräteinformation auf für den Versand von validen ersten Nachrichten berechtigten Geräten bezogen ist, wobei die erste Nachricht eine am Telekommunikationsendgerät (20) durch einen Benutzer einzugebende personalisierte Kennungsinformation aufweist.

6. Verfahren nach einem der vorhergehenden Ansprüche, **dadurch gekennzeichnet, dass** das Identifikationsmodul (13) eine SIM-Karte (Subscriber Identity Module) oder eine USIM-Karte (Universal Subscriber Identity Module) ist.

7. Verfahren nach einem der vorhergehenden Ansprüche, **dadurch gekennzeichnet, dass** das Kommunikations-Schnittstellenmodul (10) mit einer Mehrzahl von elektrischen Geräten (31, 32, 36, 37, 38) lokal in Verbindung steht, wobei das Identifikationsmodul (13) ein identisches Identifikationsmodul für die Mehrzahl von elektrischen Geräten (31, 32, 36, 37, 38) ist oder wobei das Identifikationsmodul (13) ein multivalentes, mehrere verschiedene Identitäten bereitstellendes Identifikationsmodul für die Mehrzahl von elektrischen Geräten (31, 32, 36, 37, 38) derart ist, dass jedem elektrischen Gerät (31, 32, 36, 37, 38) der Mehrzahl von elektrischen Geräten (31, 32, 36, 37, 38) ein Identität des Identifikationsmoduls (13) zuordenbar ist.

8. Verfahren nach einem der vorhergehenden Ansprüche, **dadurch gekennzeichnet, dass** das Kommunikations-Schnittstellenmodul (10) eine Speichereinrichtung aufweist, wobei in der Speichereinrichtung Informationen bezüglich der ersten, vom Telekommunikationsendgerät (20) empfangenen Nachricht und/oder bezüglich der zweiten, an das Telekommunikationsendgerät (20) gesendeten Nachricht gespeichert werden, wobei die in der Speichereinrichtung gespeicherten Informationen wenigstens das Datum und die Zeit der ersten und/oder zweiten Nachricht umfassen, wobei insbesondere die in der Speichereinrichtung gespeicherten Informationen darüber hinaus wenigstens einen Teil des Nachrichteninhalts, insbesondere den gesamten Nachrichteninhalt, der ersten Nachricht und/oder der zweiten Nachricht umfassen.

9. System umfassend ein Kommunikations-Schnittstellenmodul (10) und ein Telekommunikationsendgerät (20), wobei das Kommunikations-Schnittstellenmodul (10) zur Kommunikation mit dem Telekommunikationsendgerät (20) über ein Telekommunikationsnetz (100) konfiguriert ist, wobei das Kommunikations-Schnittstellenmodul (10) mit wenigstens einem elektrischen Gerät (31, 32, 36, 37, 38) lokal in Verbindung steht, wobei das Kommunikations-Schnittstellenmodul (10) ein Identifikationsmodul (13) aufweist, wobei das Telekommunikationsendgerät (20) ein programmierbares Telekommunikationsendgerät (20) mit einer Anwendung (21) ist, wobei das System derart konfiguriert ist, dass wenigstens eine erste Nachricht durch die Anwendung (21) des Telekommunikationsendgeräts (20) zum Kommunikations-Schnittstellenmodul (10) übertragen wird und dass wenigstens eine zweite Nachricht durch das Kommunikations-Schnittstellenmodul (10) zum Telekommunikationsendgerät (20) übertragen wird, wobei das System ferner derart konfiguriert ist, dass die erste Nachricht und die zweite Nachricht
-- unter Benutzung einer Internet-Protokoll-Verbindung und/oder zwischen einerseits dem Kommunikations-Schnittstellenmodul (10) und dem Telekommunikationsnetz (100) und andererseits dem Telekommunikationsendgerät (20) und dem Telekommunikationsnetz (100) übertragen wird, wobei das System ferner konfiguriert ist, dass eine Identifizierung des Kommunikations-Schnittstellenmoduls (10) mittels des Identifikationsmoduls (13) erfolgt, wobei das Kommunikations-Schnittstellenmodul (10) eine Festnetzschnittstelle (11'), und eine Mobilfunkschnittstelle (12'), aufweist, wobei das System derart konfiguriert ist, dass für die Übertragung der ersten und/oder zweiten Nachricht zwischen dem Kommunikations-Schnittstellenmodul (10) und dem Telekommunikationsnetz (100) ein drahtgebundener Kommunikationskanal unter Nutzung der Festnetzschnittstelle (11') oder ein wenigstens in Teilen drahtloser Kommunikationskanal unter Nutzung der Mobilfunkschnittstelle (12') benutzt wird, wobei das System derart konfiguriert ist, dass in Abhängigkeit der Verfügbarkeit des drahtgebundenen Kommunikationskanals und/oder des drahtlosen Kommunikationskanals und in Abhängigkeit eines weiteren Parameters die Übertragung der ersten und/oder zweiten Nachricht
-- entweder unter Nutzung der Festnetzschnittstelle (11') oder
-- unter Nutzung der Mobilfunkschnittstelle (12')
erfolgt, **dadurch gekennzeichnet, dass** der weitere Parameter, in Abhängigkeit dessen die Übertragung der ersten und/oder zweiten Nachricht entweder unter Nutzung der Festnetzschnittstelle (11') oder unter Nutzung der Mobilfunkschnittstelle (12') erfolgt, ein Parameter oder mehrere Parameter aus der nachfolgenden Liste von Parametern ist:
-- das Datum der Übertragung der ersten und/oder zweiten Nachricht,
-- die Uhrzeit der Übertragung der ersten und/oder zweiten Nachricht,
-- der Zustand des Kommunikations-Schnittstellenmoduls (10),
-- der Zustand eines elektrischen Geräts (31, 32, 36, 37, 38), mit welchem das Kommunikations-Schnittstellenmodul (10) lokal in Verbindung steht, wobei das Kommunikations-Schnittstellenmodul (10) dazu ausgebildet ist, selbständig diejenige Verbindung über zur Verfügung stehende Schnittstellen und Protokolle zu wählen, die die Übertragung der ersten und/oder zweiten Nachricht am besten ermöglicht.

10. Kommunikations-Schnittstellenmodul (10) zur Verwendung in einem System nach Anspruch 9, **dadurch gekennzeichnet, dass** das Kommunikations-Schnittstellenmodul (10)
-- eine lokale Schnittstelle erster Art (15) zum drahtgebundenen Anschluss eines ersten elektrischen Geräts (31) aufweist und/oder
-- eine lokale Schnittstelle zweiter Art (16) zum drahtgebundenen Anschluss eines zweiten elektrischen Geräts (32) derart aufweist, dass über eine lokale Schnittstelle dritter Art (33) des zweiten elektrischen Geräts (32) ein drahtgebundener Anschluss des Kommunikations-Schnittstellenmoduls (10) mit wenigstens einem dritten elektrischen Gerät (36) und/oder mit wenigstens einem vierten elektrischen Gerät (37) und/oder mit wenigstens einem fünften elektrischen Gerät (38) erfolgt,
-- eine lokale Schnittstelle dritter Art (17) zum drahtlosen Anschluss eines sechsten elektrischen Geräts (40) aufweist, wobei die lokale Schnittstelle dritter Art (17) insbesondere eine Bluetooth-Schnittstelle und/oder eine WLAN-Schnittstelle (Wireless Local Area Network Schnittstelle) und/oder eine ZigBee-Schnittstelle und/oder SRWN-Schnittstelle (Short Range Wireless Network Schnittstelle) und/oder eine NFC-Schnittstelle (Near Field Communication Schnittstelle) ist, **dadurch gekennzeichnet, dass** das Kommunikations-Schnittstellenmodul (10) dazu ausgebildet ist, selbständig diejenige Verbindung über zur Verfügung stehende Schnittstellen und Protokolle und in Abhängigkeit eines weiteren Parameters zu wählen, die die Übertragung der ersten und/oder zweiten Nachricht am besten ermöglicht, wobei der weitere Parameter, in Abhängigkeit dessen die Übertragung der ersten und/oder zweiten Nachricht
-- entweder unter Nutzung der Festnetzschnittstelle (11') oder
-- unter Nutzung der Mobilfunkschnittstelle (12') erfolgt, ein Parameter oder mehrere
Parameter aus der nachfolgenden Liste von Parametern ist:
-- das Datum der Übertragung der ersten und/oder zweiten Nachricht,
-- die Uhrzeit der Übertragung der ersten und/oder zweiten Nachricht,
-- der Zustand des Kommunikations-Schnittstellenmoduls,
-- der Zustand eines elektrischen Geräts, mit welchem das Kommunikations-Schnittstellenmodul lokal in Verbindung steht.

11. Computerprogramm mit Programmcodemitteln, mit deren Hilfe alle Schritte eines Verfahrens nach einem der Ansprüche 1 bis 8 durchführbar sind, wenn das Computerprogramm auf einer programmierbaren Einrichtung und/oder auf einem programmierbaren Telekommunikationsendgerät (20) und/oder einem Kommunikations-Schnittstellenmodul (10), insbesondere in Teilen auf einem programmierbaren Telekommunikationsendgerät (20) und in Teilen auf einem Kommunikations-Schnittstellenmodul (10), ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 8 durchführbar sind, wenn das Computerprogramm auf einer programmierbaren Einrichtung und/oder auf einem programmierbaren Telekommunikationsendgerät (20) und/oder einem Kommunikations-Schnittstellenmodul (10), insbesondere in Teilen auf einem programmierbaren Telekommunikationsendgerät (20) und in Teilen auf einem Kommunikations-Schnittstellenmodul (10), ausgeführt wird.

## Claims

1. Method for communication between a communications interface module (10) on the one hand and a telecommunications terminal (20) on the other hand via a telecommunications network (100), the communications interface module (10) being locally connected to at least one electrical device (31, 32, 36, 37, 38), the communications interface module (10) having an identification module (13), the telecommunications terminal (20) being a programmable telecommunications terminal (20) having an application (21), at least one first message being transmitted to the communications interface module (10) by the application (21) of the telecommunications terminal (20), at least one second message being transmitted to the telecommunications terminal (20) by the communications interface module (10), the first message and the second message being transmitted between the communications interface module (10) and the telecommunications network (100) on the one hand and the telecommunications terminal (20) and the telecommunications network (100) on the other hand
- using an Internet Protocol connection,
the communications interface module (10) being identified by means of the identification module (13),
the communications interface module (10) having a fixed network interface (11') and a mobile radio interface (12'), a wired communications channel being used with use of the fixed network interface (11') or a communications channel which is wireless at least in parts being used with use of the mobile radio interface (12') for transmitting the first and/or second message between the communications interface module (10) and the telecommunications network (100),
the first and/or second message being transmitted
- either using the fixed network interface (11')
- or using the mobile radio interface (12') depending on the availability of the wired communications channel and/or the wired communications channel and as a function of a further parameter,
**characterised in that** the further parameter, as a function of which the first and/or second message is transmitted either using the fixed network interface (11') or using the mobile radio interface (12'), is one or more parameters from the following list of parameters:
- the transmission date of the first and/or second message,
- the transmission time of the first and/or second message,
- the state of the communications interface module (10),
- the state of an electrical device (31, 32, 36, 37, 38) to which the communications interface module (10) is locally connected, the communications interface module (10) autonomously selecting the connection via available interfaces and protocols which best enables transmission of the first and/or second message.

2. Method according to claim 1, **characterised in that** the availability of the wired communications channel and/or of the wireless communications channel for transmitting the first and/or second message between the communications interface module (10) and the telecommunications network (100) is checked at least once within a predetermined time interval.

3. Method according to any of the preceding claims, **characterised in that**, to validate the telecommunications terminal (20) or the users thereof to the communications interface module (10), the first message includes a personalised identifier which is to be inputted at the telecommunications terminal (20) by a user or includes a piece of information derived from a personalised identifier of this type or includes a piece of information from which the personalised identifier can be derived by the communications interface module (10).

4. Method according to any of the preceding claims, **characterised in that** proper processing of the second message by the telecommunications terminal (20), in particular displaying of the message content by the telecommunications terminal (20), requires a personalised identifier which is to be inputted at the telecommunications terminal (20) by a user, in particular the second message including the personalised identifier which is to be inputted or including a piece of information derived from a personalised identifier of this type or including information from which the personalised identifier can be derived by the telecommunications terminal (20).

5. Method according to any of the preceding claims, **characterised in that** the communications interface module (10) comprises a user-configurable piece of device information, the piece of device information being related to devices authorised to transmit valid first messages, the first message including a personalised identifier which is to be inputted at the telecommunications terminal (20) by a user.

6. Method according to any of the preceding claims, **characterised in that** the identification module (13) is a SIM (subscriber identity module) card or a USIM (universal subscriber identity module) card.

7. Method according to any of the preceding claims, **characterised in that** the communications interface module (10) is locally connected to a plurality of electrical devices (31, 32, 36, 37, 38), the identification module (13) being an identical identification module for the plurality of electrical devices (31, 32, 36, 37, 38) or the identification module (13) being a multivalent identification module, which provides a plurality of different identities, for the plurality of electrical devices (31, 32, 36, 37, 38), in such a way that an identify of the identification module (13) can be assigned to each electrical device (31, 32, 36, 37, 38) in the plurality of electrical devices (31, 32, 36, 37, 38).

8. Method according to any of the preceding claims, **characterised in that** the communications interface module (10) has a storage means, information regarding the first message, received from the telecommunications terminal (20), and/or regarding the second message, sent to the telecommunications terminal (20), being stored in the storage means, the information stored in the storage means comprising at least the date and the time of the first and/or second message, in particular the information stored in the storage means further comprising at least part of the message content, in particular the entire message content, of the first message and/or of the second message.

9. System comprising a communications interface module (10) and a telecommunications terminal (20), the communications interface module (10) being configured for communication with the telecommunications terminal (20) via a telecommunications network (100), the communications interface module (10) being locally connected to at least one electrical device (31, 32, 36, 37, 38), the communications interface module (10) having an identification module (13), the telecommunications terminal (20) being a programmable telecommunications terminal (20) having an application (21), the system being configured in such a way that at least one first message is transmitted to the communications interface module (10) by the application (21) of the telecommunications terminal (20) and that at least one second message is transmitted to the telecommunications terminal (20) by the communications interface module (10), the system further being configured in such a way that the first message and the second message are transmitted between the communications interface module (10) and the telecommunications network (100) on the one hand and the telecommunications terminal (20) and the telecommunications network (100) on the other hand
- using an Internet Protocol connection,
the system further being configured in such a way that the communications interface module (10) is identified by means of the identification module (13), the communications interface module (10) having a fixed network interface (11') and a mobile radio interface (12'), the system being configured in such a way that a wired communications channel is used, with use of the fixed network interface (11'), or a communications channel which is wireless at least in parts is used, with use of the mobile radio interface (12'), for transmitting the first and/or second message between the communications interface module (10) and the telecommunications network (100), the system being configured in such a way that the first and/or second message is transmitted
- either using the fixed network interface (11')
- or using the mobile radio interface (12') depending on the availability of the wired communications channel and/or the wired communications channel and as a function of a further parameter,
**characterised in that** the further parameter, as a function of which the first and/or second message is transmitted either using the fixed network interface (11') or using the mobile radio interface (12'), is one or more parameters from the following list of parameters:
- the transmission date of the first and/or second message,
- the transmission time of the first and/or second message,
- the state of the communications interface module (10),
- the state of an electrical device (31, 32, 36, 37, 38) to which the communications interface module (10) is locally connected, the communications interface module (10) being formed to select autonomously the connection via available interfaces and protocols which best enables transmission of the first and/or second message.

10. Communications interface module (10) for use in a system according to claim 9, **characterised in that** the communications interface module (10) has
- a local interface of a first type (15) for wired connection of a first electrical device (31), and/or
- a local interface of a second type (16) for wired connection of a second electrical device (32) in such a way that, via a local interface of a third type (33) of the second electrical device (32), wired connection of the communications interface module (10) to at least one third electrical device (36) and/or to at least one fourth electrical device (37) and/or to at least one fourth electrical device (37) and/or to at least one fifth electrical device (38) takes place,
- a local interface of a third type (17) for wireless connection of a sixth electrical device (40), the local interface of a third type (17) in particular being a Bluetooth interface and/or a WLAN interface (wireless local area network interface) and/or a ZigBee interface and/or an SRWN interface (short-range wireless network interface) and/or an NFC interface (near-field communication interface),
**characterised in that** the communications interface module (10) is formed to select autonomously, as a function of a further parameter, the connection via available interfaces and protocols which best enables transmission of the first and/or second message, the further parameter, as a function of which the first and/or second message is transmitted
- either using the fixed network interface (11')
- or using the mobile radio interface (12'), being one or more parameters from the following list of parameters:
- the transmission date of the first and/or second message,
- the transmission time of the first and/or second message,
- the state of the communications interface module,
- the state of an electrical device to which the communications interface module is locally connected.

11. Computer program comprising program code means by way of which all steps of a method according to any of claims 1 to 8 can be carried out when the computer program is executed on a programmable means and/or on a programmable telecommunications terminal (20) and/or a communications interface module (10), in particular in parts on a programmable telecommunications terminal (20) and in parts on a communications interface module (10).

12. Computer program product comprising a computer-readable medium and a computer program stored on the computer-readable medium and comprising program code means suitable for all steps of a method according to any of claims 1 to 8 to be able to be carried out when the computer program is executed on a programmable means and/or on a programmable telecommunications terminal (20) and/or a communications interface module (10), in particular in parts on a programmable telecommunications terminal (20) and in parts on a communications interface module (10).

## Revendications

1. Procédé de communication entre un module d'interface de communication (10) d'un côté et un terminal de télécommunication (20) de l'autre côté par le biais d'un réseau de télécommunication (100), le module d'interface de communication (10) étant localement en liaison avec au moins un appareil (31, 32, 36, 37, 38) électrique, le module d'interface de communication (10) comportant un module d'identification (13), le terminal de télécommunication (20) étant un terminal de télécommunication (20) programmable, doté d'une application (21), au moins un premier message étant transmis par l'application (21) du terminal de télécommunication (20) au module d'interface de communication (10), au moins un deuxième message étant transmis par le module d'interface de communication (10) au terminal de télécommunication (20), le premier message et le deuxième message étant transmis
- avec utilisation d'une liaison protocole internet entre d'un côté le module d'interface de communication (10) et le réseau de télécommunication (100) et de l'autre côté le terminal de télécommunication (20) et le réseau de télécommunication (100), une identification du module d'interface de communication (10) s'effectuant au moyen du module d'identification (13),
le module d'interface de communication (10) comportant une interface de réseau fixe (11') et une interface de radio mobile (12'), un canal de communication câblé étant utilisé pour la transmission du premier message et/ou du deuxième message entre le module d'interface de communication (10) et le réseau de télécommunication (100), avec utilisation de l'interface de réseau fixe (11'), ou un canal de communication au moins en partie sans fil étant utilisé, avec utilisation de l'interface de radio mobile (12'),
la transmission du premier et/ou du deuxième message s'effectuant en fonction de la disponibilité du canal de communication câblé et/ou du canal de communication sans fil et en fonction d'un autre paramètre
- soit avec utilisation de l'interface de réseau fixe (11'), soit
- avec utilisation de l'interface de radio mobile (12'), **caractérisé en ce que** l'autre paramètre, en fonction duquel s'effectue la transmission du premier et/ou du deuxième message soit avec utilisation de l'interface de réseau fixe (11'), soit avec utilisation de l'interface de radio mobile (12'), est un paramètre ou plusieurs paramètres figurant dans la liste de paramètres suivante :
- la date de la transmission du premier et/ou du deuxième message,
- l'heure de la transmission du premier et/ou du deuxième message,
- l'état du module d'interface de communication (10),
- l'état d'un appareil (31, 32, 36, 37, 38) électrique avec lequel le module d'interface de communication (10) est localement en liaison, le module d'interface de communication (10) choisissant automatiquement, par le biais d'interfaces et de protocoles disponibles, la liaison qui permet au mieux la transmission du premier et/ou du deuxième message.

2. Procédé selon la revendication 1, **caractérisé en ce que** la disponibilité du canal de communication câblé et/ou du canal de communication sans fil pour la transmission du premier et/ou du deuxième message entre le module d'interface de communication (10) et le réseau de télécommunication (100) est contrôlée au moins une fois à l'intérieur d'un intervalle de temps prescrit.

3. Procédé selon l'une des revendications précédentes, **caractérisé en ce que**, pour la validation du terminal de télécommunication (20) ou de son utilisateur vis-à-vis du module d'interface de communication (10), le premier message comporte une information d'identification personnalisée devant être entrée sur le terminal de télécommunication (20) par un utilisateur, ou comporte une information dérivée d'une telle information d'identification personnalisée, ou comporte une information dont l'information d'identification personnalisée peut être dérivée par le module d'interface de communication (10).

4. Procédé selon l'une des revendications précédentes, **caractérisé en ce que** le traitement, conforme à l'usage prévu, du deuxième message par le terminal de télécommunication (20), en particulier l'affichage du contenu d'information par le terminal de télécommunication (20), exige une information d'identification personnalisée devant être entrée sur le terminal de télécommunication (20) par un utilisateur, en particulier le deuxième message comportant l'information d'identification personnalisée à entrer, ou comportant une information dérivée d'une telle information d'identification personnalisée, ou comporte une information à partir de laquelle l'information d'identification personnalisée peut être dérivée par le terminal de télécommunication (20).

5. Procédé selon l'une des revendications précédentes, **caractérisé en ce que** le module d'interface de communication (10) comprend une information d'appareil configurable par l'utilisateur, l'information d'appareil se rapportant à des appareils autorisés à envoyer des premiers messages valides, le premier message comportant une information d'identification personnalisée devant être entrée sur le terminal de télécommunication (20) par un utilisateur.

6. Procédé selon l'une des revendications précédentes, **caractérisé en ce que** le module d'identification (13) est une carte SIM (Subscriber Identity Module) ou une carte USIM (Universal Subscriber Identity Module).

7. Procédé selon l'une des revendications précédentes, **caractérisé en ce que** le module d'interface de communication (10) est localement en liaison avec une pluralité d'appareils (31, 32, 36, 37, 38) électriques, le module d'identification (13) étant un module d'identification identique pour la pluralité d'appareils (31, 32, 36, 37, 38) électriques, ou le module d'identification (13) étant un module d'identification polyvalent fournissant plusieurs identités différentes pour la pluralité d'appareils (31, 32, 36, 37, 38) électriques de telle sorte qu'une identité du module d'identification (13) peut être affectée à chaque appareil (31, 32, 36, 37, 38) électrique de la pluralité d'appareils (31, 32, 36, 37, 38) électriques.

8. Procédé selon l'une des revendications précédentes, **caractérisé en ce que** le module d'interface de communication (10) comporte un système de mémoire, des informations concernant le premier message reçu par le terminal de télécommunication (20) et/ou concernant le deuxième message envoyé au terminal de télécommunication (20) étant enregistrées dans le système de mémoire, les informations enregistrées dans le système de mémoire comprenant au moins la date et l'heure du premier et/ou du deuxième message, en particulier les informations enregistrées dans le système de mémoire comprenant en outre au moins une partie du contenu de message, en particulier la totalité du contenu de message du premier et/ou du deuxième message.

9. Système, comprenant un module d'interface de communication (10) et un terminal de télécommunication (20), le module d'interface de communication (10) étant configuré pour la communication avec le terminal de télécommunication (20) par le biais d'un réseau de télécommunication (100), le module d'interface de communication (10) étant localement en liaison avec au moins un appareil (31, 32, 36, 37, 38) électrique, le module d'interface de communication (10) comportant un module d'identification (13), le terminal de télécommunication (20) étant un terminal de télécommunication (20) programmable, doté d'une application (21), le système étant configuré de telle sorte qu'au moins un premier message peut être transmis par l'application (21) du terminal de télécommunication (20) au module d'interface de communication (10), et en ce qu'au moins un deuxième message peut être transmis par le module d'interface de communication (10) au terminal de télécommunication (20), le système étant également configuré de telle sorte que le premier message et le deuxième message sont transmis
- avec utilisation d'une liaison protocole internet et/ou entre d'un côté le module d'interface de communication (10) et le réseau de télécommunication (100) et de l'autre côté le terminal de télécommunication (20) et le réseau de télécommunication (100), le système étant également configuré de sorte qu'une identification du module d'interface de communication (10) s'effectue au moyen du module d'identification (13), le module d'interface de communication (10) comportant une interface de réseau fixe (11') et une interface de radio mobile (12'), le système étant configuré de telle sorte que, pour la transmission premier et/ou du deuxième message entre le module d'interface de communication (10) et le réseau de télécommunication (100), un canal de communication câblé est utilisé avec utilisation de l'interface de réseau fixe (11'), ou un canal de communication au moins en partie sans fil est utilisé avec utilisation de l'interface de radio mobile (12'), le système étant configuré de telle sorte que, en fonction de la disponibilité du canal de communication câblé et/ou du canal de communication sans fil et en fonction d'un autre paramètre, la transmission du premier et/ou du deuxième message s'effectue
- soit avec utilisation de l'interface de réseau fixe (11'),
- soit avec utilisation de l'interface de radio mobile (12'), **caractérisé en ce que** l'autre paramètre, en fonction duquel la transmission du premier et/ou du deuxième message s'effectue soit avec utilisation de l'interface de réseau fixe (11'), soit avec utilisation de l'interface de radio mobile (12'), est un paramètre ou plusieurs paramètres figurant sur la liste de paramètres suivante :
- la date de la transmission du premier et/ou du deuxième message,
- l'heure de la transmission du premier et/ou du deuxième message,
- l'état du module d'interface de communication (10),
- l'état d'un appareil (31, 32, 36, 37, 38) électrique avec lequel le module d'interface de communication (10) est localement en liaison, le module d'interface de communication (10) étant constitué pour choisir automatiquement, par le biais d'interfaces et de protocoles disponibles, la liaison qui permet au mieux la transmission du premier et/ou du deuxième message.

10. Module d'interface de communication (10) destiné à être utilisé dans un système selon la revendication 9, **caractérisé en ce que** le module d'interface de communication (10) comporte
- une interface locale du premier type (15) pour la connexion câblée d'un premier appareil électrique (31) et/ou
- une interface locale du deuxième type (16) pour la connexion câblée d'un deuxième appareil électrique (32) de telle sorte que, par le biais d'une interface locale du troisième type (33) du deuxième appareil électrique (32), il s'effectue une connexion câblée du module d'interface de communication (10) avec au moins un troisième appareil électrique (36) et/ou avec au moins un quatrième appareil électrique (37) et/ou avec au moins un cinquième appareil électrique (38),
- une interface locale du troisième type (17) pour la connexion sans fil d'un sixième appareil électrique (40), l'interface locale du troisième type (17) étant en particulier une interface Bluetooth et/ou une interface WLAN (interface Wireless Local Area Network) et/ou une interface ZigBee et/ou une interface SRWN (interface Short Range Wireless Network) et/ou une interface NFC (interface Near Field Communication), **caractérisé en ce que** le module d'interface de communication (10) est constitué pour choisir automatiquement, par le biais d'interfaces et de protocoles disponibles et en fonction d'un autre paramètre, la liaison qui permet au mieux la transmission du premier et/ou du deuxième message, l'autre paramètre, en fonction duquel s'effectue la transmission du premier et/ou du deuxième message
- soit avec utilisation de l'interface de réseau fixe (11'), soit
- avec utilisation de l'interface de radio mobile (12'), étant un paramètre ou plusieurs paramètres figurant dans la liste de paramètres suivante :
- la date de la transmission du premier et/ou du deuxième message,
- l'heure de la transmission du premier et/ou du deuxième message,
- l'état du module d'interface de communication,
- l'état d'un appareil électrique avec lequel le module d'interface de communication est localement en liaison.

11. Programme informatique avec des moyens de code de programme à l'aide desquels toutes les étapes d'un procédé selon l'une des revendications 1 à 8 peuvent être réalisées quand le programme informatique est exécuté sur un système programmable et/ou sur un terminal de télécommunication (20) programmable et/ou sur un module d'interface de communication (10), en particulier en partie sur un terminal de télécommunication (20) programmable et en partie sur un module d'interface de communication (10).

12. Produit de programme informatique avec un support lisible par ordinateur et avec un programme informatique enregistré sur le support lisible par ordinateur, avec des moyens de code de programme qui sont appropriés pour que toutes les étapes d'un procédé selon l'une des revendications 1 à 8 puissent être réalisées quand le programme informatique est exécuté sur un système programmable et/ou sur un terminal de télécommunication (20) programmable et/ou sur un module d'interface de communication (10), en particulier en partie sur un terminal de télécommunication (20) programmable et en partie sur un module d'interface de communication (10).
